# EUROPEAN PATENT SPECIFICATION

(11) **EP 3 857 830 B1**
(45) Date of publication and mention of the grant of the patent: **01.10.2025**
(21) Application number: 18795613.1
(22) Date of filing: 30.10.2018
(51) Int. Cl.: H04L 47/56, H04L 47/28, H04L 47/70, H04L 67/60, H04L 67/62

(54) **METHODS AND DEVICES FOR DEADLINE-AWARE FLOW SCHEDULING IN TIME SENSITIVE NETWORKS**
VERFAHREN UND VORRICHTUNGEN ZUR TERMINBEWUSSTEN FLUSSABLAUFPLANUNG IN ZEITSENSIBLEN NETZWERKEN
DISPOSITIFS ET PROCÉDÉS DE PLANIFICATION DE FLUX SENSIBLE AUX ÉCHÉANCES TEMPORELLES DANS DES RÉSEAUX SENSIBLES AU TEMPS

(43) Date of publication of application: 04.08.2021
(73) Proprietor: Huawei Technologies Co., Ltd., Longgang District Shenzhen, Guangdong 518129 (CN)
(72) Inventor: TANG, Siyu, 80992 Munich (DE)
(74) Representative: Grünecker Patent- und Rechtsanwälte PartG mbB
(86) International application number: PCT/EP2018/079726
(87) International publication number: WO 2020/088745

(56) References cited:
- EP-A2- 1 528 729
- US-A1- 2013 128 730
- US-A1- 2017 070 439
- US-A1- 2017 164 404

## Description

The present disclosure relates to a method for scheduling transmission of a data packet from a talker node to a listener node via one or more intermediate nodes. The disclosure further relates to a device for operating as an intermediate node in a network.

### BACKGROUND

An industrial communications and control network is a system of interconnected equipment for monitoring and controlling physical equipment in an industrial environment. The development of (digital) industrial communications system comprises three generations, namely fieldbus technologies, Ethemet-based solutions and IEEE 802.1 Time Sensitive Networking (TSN), an open standard to promote interoperability of Ethernet based solutions in industrial communications and control networks. One main feature of the IEEE 802.1 TSN standard is a time division multiplexing (TDM) technique for controlling; opening and closing of gates, thus providing ways of handling real-time and non real-time traffic on the same link.

Configuring the schedules of the gates (i.e. time-aware queues) to achieve bounded end-to-end (E2E) network delay is not a trivial issue. Existing solutions suffer from issues such as high configuration complexity and excessive computational time, as further explained below. A TSN system with a conventional offline scheduler can be ill-suited for scenarios such as cloud-based industrial control and flexible factory manufacturing, where frequent changes in the network are expected. The computational complexity of current techniques is also less favored in (semi-) static cases because a re-configuration needs to be initiated (which may require excessive computational time) even though only slight changes may have occurred in the network.

EP 1 528 729 A2 discloses distance-sensitive scheduling of TDM-over-packet-traffic wherein traffic prioritization is performed based on a number of intermediate nodes/hops between edge nodes.

US 2017/164404 A1 discloses scheduling data transmissions based on an end-to-end delay bound wherein a scheduler schedules a time for transmission of a data packet.

US 2017/070439 A1 discloses an incremental scheduling method for deterministic networks with nodes and star couplers being connected in a multi-hop fashion wherein a preconfigured global cyclic time schedule for transmission of messages between network components is distributed to the network components.

US 2013/128730 A1 discloses a method of distributed QoS traffic scheduling wherein allocation of values for per-hop metrics is done by a centralized management entity and each hop, accordingly, schedules packet forwarding according to the value of the metrics that has been assigned to it and a QoS mechanism that allows unused portions of cumulative metrics of a node along a communication path to be made available to nodes further along the path to the destination.

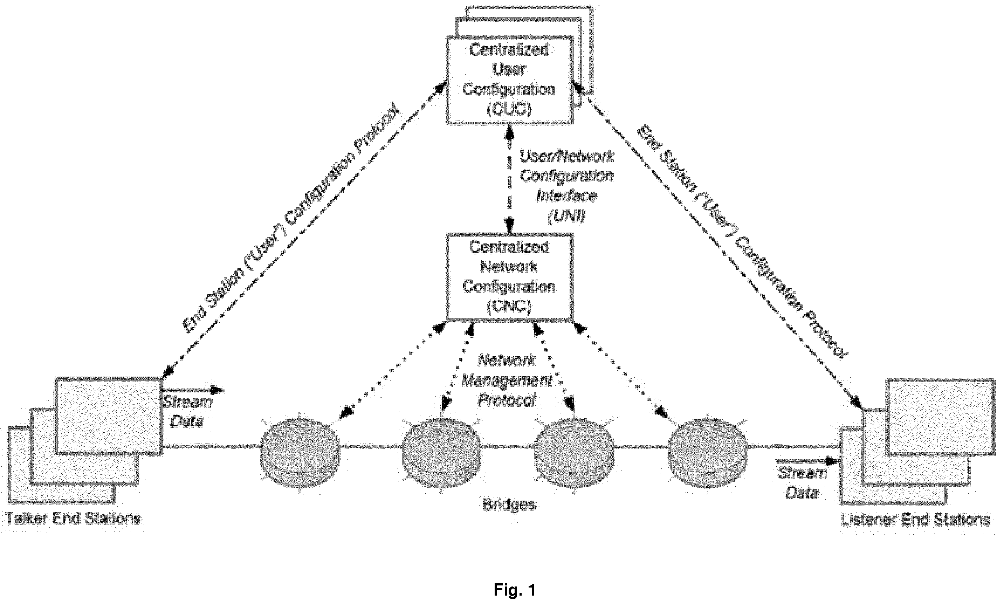

Up to date, a commonly used approach for configuring a TSN network is to centralize the computation in a single entity known as a centralized network controller (CNC) (see Fig. 1). Once the computation has been completed, the CNC uses remote management to configure TSN features (e.g., a credit-based shaper, scheduled traffic and cyclic queuing and forwarding) in each bridge (also called switch, node, bridge node, or intermediate node). The data stream may be transmitted from a Talker End Station to a Listener End Station via the bridges, wherein the first one, linked to the Talker End Station, is denoted as an edge device (node) and the other bridges as core devices (nodes).

In an example described below with reference to Fig. 1, the TSN CNC configuration operates in the following way (cf. Fig. 1):
Step 1: The end station registers a joining flow to the centralized user configuration (CUC) module. The CUC notifies the centralized network controller (CNC) module about the associated parameters (cycle time, latency, jitter requirements, etc.) of the joining flow.

Step 2: The CNC utilizes certain schemes to compute the configuration parameters (e.g., using a gate control list for scheduled traffic).

Step 3: The CNC uses remote management to detect the physical topology and retrieve bridge capabilities, and distributes the computed parameters to each switch (e.g., each Ethernet switch). Due to the global time synchronization protocol implemented in a TSN network, an end station can start sending datagrams according to the computation in Step 3.

The existing TSN features encounter different problems. For instance, configuration of scheduled traffic using IEEE 802.1Qbv suffers from the scalability issue. The configuration computation time increases exponentially as the number of flows to be scheduled grows. It can take up to a few hours to complete the scheduling in a medium to high complex network. Performance of a credit-based shaper (CBS) reduces as the network diameter increases.

The network latency experienced by a frame of the cyclic queuing and forwarding (CQF) scheme, on the other hand, is dependent on the cycle time and the number of hops (from node to node).

If an in-factory scenario is considered in which Programmable Logic Controllers (PLCs) and sensors/actuators are located in closed proximity, a small network size of a few hops appears to be feasible. However, with emerging applications such PLC cloudification, the network diameter may increase, making existing solutions such CBS/QCF ill-suited for such scenarios. Besides, a network hop-count on public Internet is unlikely to be controlled if deterministic networking is to be applied.

### SUMMARY OF INVENTION

The aim of the invention is to provide a flexible, scalable and efficient way of scheduling flows in a network, in particular, in a deterministic network.

The present disclosure provides a method for scheduling flows in a network.

The scope of the invention is defined by the appended independent claims. Further embodiments are defined in their respective dependent claims.

According to one aspect of the present disclosure, a method for scheduling transmission of a data packet from a talker node to a listener node via one or more intermediate nodes with a maximum allowed end-to-end, E2E, latency is provided, wherein the method comprises for each of the one or more intermediate nodes the following steps: determining, by a scheduler, a latency budget such that the sum of the latency budgets for all the intermediate nodes is less than or equal to the maximum allowed E2E latency; communicating, by the scheduler, the determined latency budget to each of the one or more intermediate nodes; and scheduling, by each of the one or more intermediate nodes, a time for transmission of the data packet from the intermediate node to a next node based on the communicated latency budget. The latency budgets are determined by a scheduler, e.g., a CNC, and the time for transmission of the data packet from the intermediate node to the next node is scheduled by the respective intermediate node.

Scheduling the time for transmission of the data packet from the intermediate node to the next node may comprise selecting a free period within a transmission time window as a transmission period for the data packet, wherein the free period is selected based on the latency budget. The transmission time window may be part of a sequence of transmission time windows. The transmission window may be referred to herein also as the transmission window or simply as the window. A free period is a period that has not been selected as a transmission period for any data packet yet. When a free period has been selected as a transmission period, that period is no longer free. In other words, the free period is reserved for transmission of the data packet. It is understood that the transmission period needs to be sufficiently early in the transmission window to comply with the latency budget.

Selecting the free period as the transmission period for the data packet comprises a step of not selecting an earliest free period of the transmission time window as the transmission period for the data packet if the transmission time window comprises multiple free periods that each complies with the latency budget.

This allows to schedule one or more other data packets to be transmitted earlier than the data packet, if required.

The data packet can thus be scheduled with an individual latency budget at each of the intermediate nodes wherein the sum of the latency budgets over the intermediate nodes is such that the data packet can be scheduled so as to arrive at the listener node within a predefined time interval after sending (i.e. transmitting) the data packet by the talker node. The next node may be the listener node or one of the intermediate nodes. The method may further comprise: transmitting the data packet from the intermediate node to the next node based on the scheduled time.

Said scheduling the time for transmission of the data packet from the intermediate node to the next node may comprise the steps of determining a waiting time budget which is shorter than the latency budget, and scheduling the time for transmission based on the waiting time budget. More specifically, the waiting time budget may be defined as the latency budget minus a time budget for processing and transmitting the data packet and for propagating the data packet to the next node. Therefore, the waiting time period corresponds to a time that is available for the data packet to wait at the respective intermediate node, e.g., in a queue.

The free period may be selected as the transmission period such that a sum of a first delay and a second delay is less than or equal to the latency budget, wherein the first delay is a time from arrival of the data packet at the intermediate node to the beginning of the free period, and the second delay is an estimate of a time from the beginning of the free period to arrival of the data packet at the next node. In other words, the beginning of the free period is chosen such that the first delay equals the waiting time budget for the data packet at the node. In other words, the second delay is an estimated time from sending the data packet by the intermediate node to arrival of the data packet at the next node.

Selecting the free period as the transmission period for the data packet may comprise a step of selecting a latest suitable free period within the transmission window based on the latency budget. The latest suitable period is the latest free period (within the transmission time window) that complies with the latency budget of the data packet.

The method may comprise for each of one or more further data packets to be transmitted via the intermediate node a step of selecting a free period within the transmission time window as a transmission period for the further data packet. For each of the further data packets, the respective free period may be selected according to the same rules as for any other data.

This may further comprise a step of sending, by the intermediate node, the data packet and the one or more further data packets one after another in accordance with the chronological order of the transmission periods that are associated with the data packet and the one or more further data packets. In an embodiment, the intermediate node may send the data packet and the one or more further data packets immediately one after another, irrespective of the presence or absence of any free periods in the transmission time window. In this or in another embodiment, the intermediate node may start said sending the data packet and the one or more further data packets at the beginning of the transmission time window, irrespective of the presence or absence of a free period at the beginning of the transmission time window.

Said scheduling the time for transmission of the data packet from the intermediate node to the next node may comprise for each of one or more further data packets to be transmitted by the intermediate node the following steps: increasing a latency budget for the further data packet; and scheduling a time for transmission of the further data packet from the intermediate node based on the increased latency budget. This corresponds to a re-scheduling of one or more further data packets, for example, if the intermediate node determines that the latency budget requirement cannot be fulfilled for the data packet without changing a latency budget for at least one other data packet.

This may further comprise a step of decreasing a latency budget for the further data packet at another node. The increased latency budget at the intermediate node may thus be compensated for by a decreased latency budget at one or more other nodes that follow.

According to another aspect of the present disclosure, a device for operating as an intermediate node in a network is provided, the device comprising processing circuitry configured to schedule a time for transmission of a data packet from the intermediate node to a next node by selecting a free period within a transmission time window as a transmission period for the data packet, wherein the free period is selected based on a latency budget communicated by a scheduler. A free period is a period that has not been selected as a transmission period for any data packet. When a free period has been selected as a transmission period, that period is no longer free. In other words, the free period is reserved for transmission of the data packet. It is understood that the transmission period needs to be sufficiently early in the transmission window to comply with the latency budget.

The processing circuitry is configured to select not the earliest of the multiple free periods as the transmission period for the data packet if the transmission time window comprises multiple free periods that each complies with the latency budget. According to a further aspect, the processing circuitry may be configured to select the latest of the multiple free periods as the transmission period for the data packet if the transmission time window comprises multiple free periods that each complies with the latency budget.

According to another aspect of the present disclosure, a computer-readable medium is provided, storing instructions that when executed on a processor cause the processor to perform the method of the present disclosure or the method of any one of the further aspects thereof, as described above.

Additional features and advantages of the present invention will be described with reference to the drawings. In the description, reference is made to the accompanying figures that are meant to illustrate preferred embodiments of the invention. It is understood that such embodiments do not represent the full scope of the invention defined by the appended claims.

### BRIEF DESCRIPTION OF DRAWINGS

In the following, exemplary embodiments are described in more detail with reference to the attached figures and drawings, in which:
- Figure 1: schematically shows an example of an existing TSN centralized configuration architecture.
- Figure 2: schematically shows details of an example of a method of scheduling (centralized mode) on a control plane.
- Figure 3: schematically shows details of an example of a method of scheduling.
- Figure 4: schematically illustrates an example of a method that involves per-class scheduling.
- Figure 5: schematically illustrates an example of Frame State Information (FSI).
- Figure 6: schematically illustrates a minimum (tₛₜₐᵣₜ) and maximum (Ω_{actual}) expected latency of a data packet on a link.
- Figure 7: illustrates an improvement in accuracy achieved with an implementation form of an Active and Accurate Latency Prediction (AALP) technique.
- Figure 8: shows a flow-chart of an example of a method of network-wide latency orchestration (i.e. scheduling flows in the network).
- Figure 9: shows examples of a three-step model in a network-wide latency orchestration module.
- Figure 10: schematically illustrates an example of traffic classification and queuing.
- Figure 11: illustrates an example of two different working modes in a priority queue.
- Figure 12: shows an example of meta code to compute a per-link transmission schedule, i.e. tₛₜₐᵣₜ and Ω_{cyc}.
- Figure 13: shows an example of meta code to schedule a new flow with preemption.
- Figure 14: shows an example of meta code to implement a preemption function.

### DETAILED DESCRIPTION

Various examples of implementation forms of the techniques mentioned above are described below. In the interest of clarity, not all features of an actual implementation are described in this specification. It will of course be appreciated that in the development of any such an actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

The following embodiments are described in sufficient detail to enable those skilled in the art to make use of the disclosure. It is to be understood that other embodiments would be evident, based on the present disclosure, and that system, structure, process or mechanical changes may be made without departing from the scope of the present disclosure defined by the appended claims. In the following description, numeral-specific details are given to provide a thorough understanding of the disclosure. However, it would be apparent that the embodiments of the disclosure may be practiced without the specific details. In order to avoid obscuring the present disclosure, some well-known circuits, system configurations, structure configurations and process steps are not disclosed in detail.

The aim of the invention is to provide a flexible, scalable and efficient approach to schedule flows in a deterministic network. Although in the embodiments such an approach is mainly discussed in the context of L2 (Ethernet) networking, the proposed methodology can be adopted for an IP-based network.

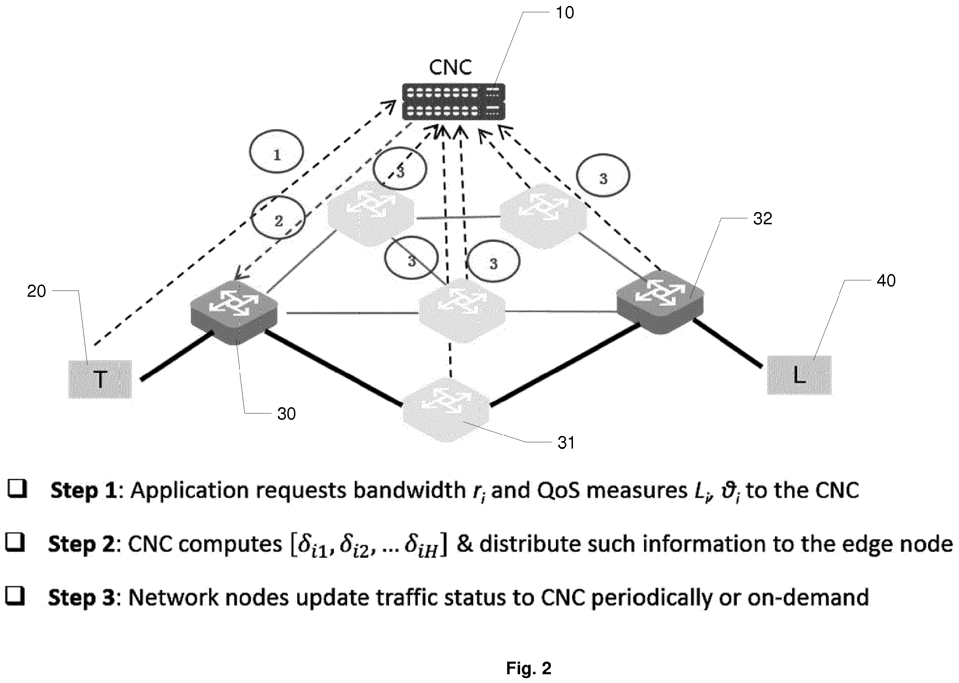

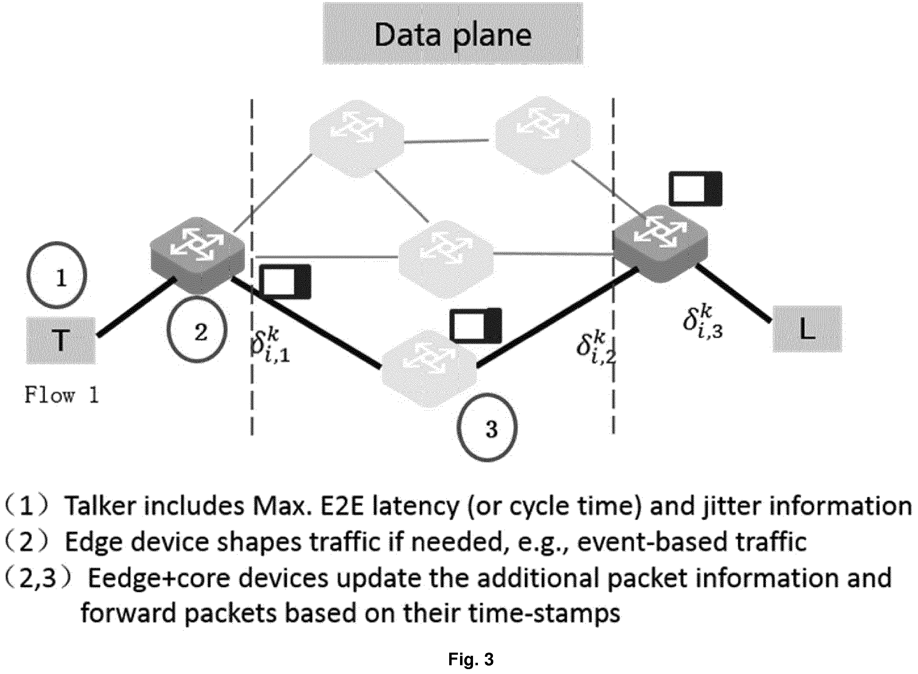

In this disclosure, the scheduling method may be performed at least partly in a centralized mode. For example, configuration parameters may be computed by a CNC. The operations according to one implementation form are illustrated in Figs. 2 and 3. A device operating as nodes or bridge nodes in the network is categorized either as an Edge device or as a Core device, depending on its functionality, wherein the Edge device is linked to the Talker End Station (T).

Fig. 2 shows a network including a device 10 for scheduling a transmission of a data packet from a talker node 20 (T) to a listener node 40 (L) via one or more intermediate nodes 30, 31, 32 with a maximum allowed end-to-end, E2E, latency. The device 10 comprises processing circuitry configured for each of the intermediate nodes 30, 31, 32 to determine a latency budget such that the sum of the latency budgets for the one or more intermediate nodes 30, 31, 32 is less than or equal to the maximum allowed E2E latency; and to communicate the latency budget to the intermediate node 30, 31, 32.

For example, in a Control Plane as shown in Fig. 2, the following steps may be performed. Step 1) The end station (noted as a Talker, T) registers a joining flow to the CUC/CNC (the configuration information is automatically transferred and translated from the end station to the CUC/CNC).

Step 2) The CNC utilizes a so-called Active and Accurate Latency Prediction (AALP) scheme to estimate the optimal transmission window, characterized by (min, max), on each link. A scheme to orchestrate (manage) the per-hop latency distribution over H hops is deployed in order to satisfy an E2E latency/jitter requirement on a network-wide basis. The configuration is reflected in a vector [δᵢ₁, δᵢ₂,..., δ_{iH}] wherein δᵢₖ is the latency budget of a data packet of flow number i at node numbered k wherein k=1,...,H. The CNC distributes the configuration [δᵢ₁, δᵢ₂,..., δ_{iH}] to the edge device. If features such as (per-flow) ingress policing (i.e. 802.1Qci) are enabled at individual nodes, the vector [δᵢ₁, δᵢ₂,..., δ_{iH}] can be distributed to each node for look-up action (combined with per-flow filtering/policing). In some scenarios, a computing engine is included in each networking device (in addition to the computing engine in CNC) to adjust the vector [δᵢ₁, δᵢ₂,..., δ_{iH}].

Step 3) The network (edge and core) updates the physical topology, Bridge capabilities and traffic status to the CNC via remote management.

In the Data Plane as shown in Fig. 3, the following steps may be performed (for reference signs see Fig. 2).

Step 1) The talker 20 includes a maximum latency and/or jitter information in the frame header.

Step 2) The edge device 30 shapes the traffic if necessary or requested. The edge device 30 maintains per-flow state and thus copies the configuration [δᵢ₁, δᵢ₂,..., δ_{iH}] distributed from the CNC to each data packet header. In a second setting, where ingress per-flow policing (i.e. 802.1Qci) is present, the configuration [δᵢ₁, δᵢ₂,..., δ_{iH}] is distributed and stored in each networking device. A networking device can look up the corresponding value δᵢⱼ stored on each node instead of looking it up in the packet header (i.e. in the FSI field described below).

Step 3) The edge node 30 and core nodes 31, 32 update the respective consumed latency, prioritize packets as specified by the time-stamp [δᵢ₁, δᵢ₂,..., δ_{iH}], and forward the data packets based on the prioritized order.

The advantages of the aforementioned solution are as follows. Unlike existing schemes such as CBS or CQF, performance of the solution according to the present disclosure is independent of the network diameter (i.e. path hop-count). A flexible transmission window arrangement and efficient usage of network resources with adaptive transmission window preemption can be achieved. The latency to be experienced on a node can be estimated accurately. The solution has proven optimality in terms of the schedulable region.

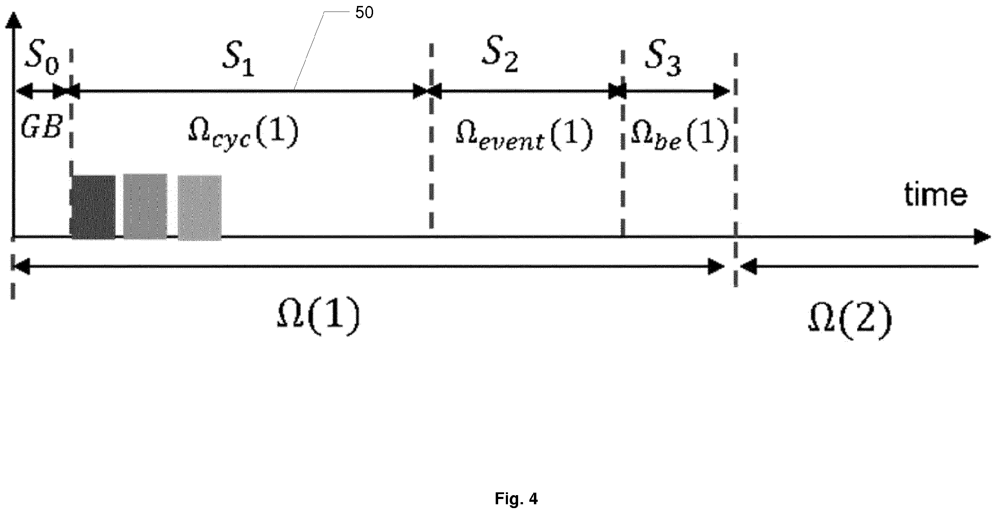

In the present disclosure per-class scheduling is performed. That is, data belonging to the same traffic class is transmitted in the same transmission time window in a given network cycle. This is illustrated in Fig. 4, wherein the scheduler reserves a transmission time window 50 (Ω_{cyc}) in every network cycle Ω(k) for cyclic traffic with latency (and optionally jitter) requirement. Interference between packets within the same traffic class is solved by prioritizing the packets with respect to their per-hop deadlines. The traffic type in Fig. 4 is purely for illustrative purpose. An arrangement of different transmission windows in the same network cycle Ω(k) is possible.

An embodiment of the method according to the present disclosure may include the following concepts.

### Frame State Information (FSI)

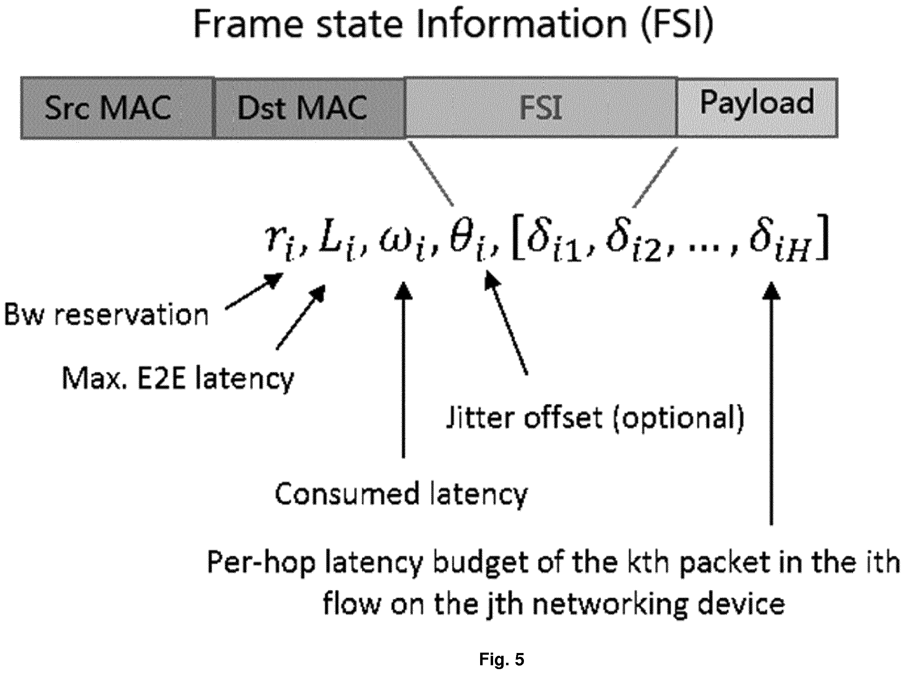

Maintaining per-flow QoS state and performing per-flow scheduling is costly and expensive. Additional information needs to be carried by the frame header to guarantee QoS in a scalable way (i.e. stateless in the core network). This requires additional fields to be included in the Media Access Control (MAC) header. A definition of the FSI is shown in Fig. 5, where rᵢ denotes a bandwidth requirement, Lᵢ denotes the max. E2E latency requirement, θᵢ denotes the (optional) jitter requirement, ωᵢ is the total consumed latency (including latency components such as propagation, processing and transmission delay) in the previous links, and the vector [δᵢ₁, δᵢ₂,..., δ_{iH}] specifies the per-hop latency budget generated by the scheduler in the CNC. Depending on if ingress per-flow filtering/policing is enabled on individual nodes, the effective FSI fields can vary. For instance, bandwidth rᵢ, max. E2E latency Lᵢ, and jitter θᵢ can be looked up instead of stored in the header. However, if a functionality of fine-tuning δᵢⱼ at a bridge node j is implemented, it is advantageous to keep the consumed latency ωᵢ in the header.

The per-hop latency budget can be encoded in different ways. A first option is to encode the precise time-stamp in the frame header. A second option is to encode the per-hop latency in terms of the fraction of the total E2E latency over each link.

In some configurations, a node j may choose to remove δᵢⱼ before forwarding the packet to the next hop. A network device, thus, only needs to refer to the first element of the per-hop latency vector.

### Per-Node Scheduling

The data packets are prioritized based on their deadlines and a latency estimation for network-wide latency orchestration is provided.

In a centralized configuration mode, the scheduler (per-node scheduling and network-wide latency orchestration module) is co-located in the CNC. The performance of network-wide latency orchestration is dependent on the accuracy of the per-node scheduling module. Upon the reception of a new service request, the network-wide orchestration module proposes the deadlines of the data packet over the H hops that it is to be delivered. The per-node scheduling module prioritizes packets based on the orchestrated deadlines and provides latency estimation to the network-wide orchestration module.

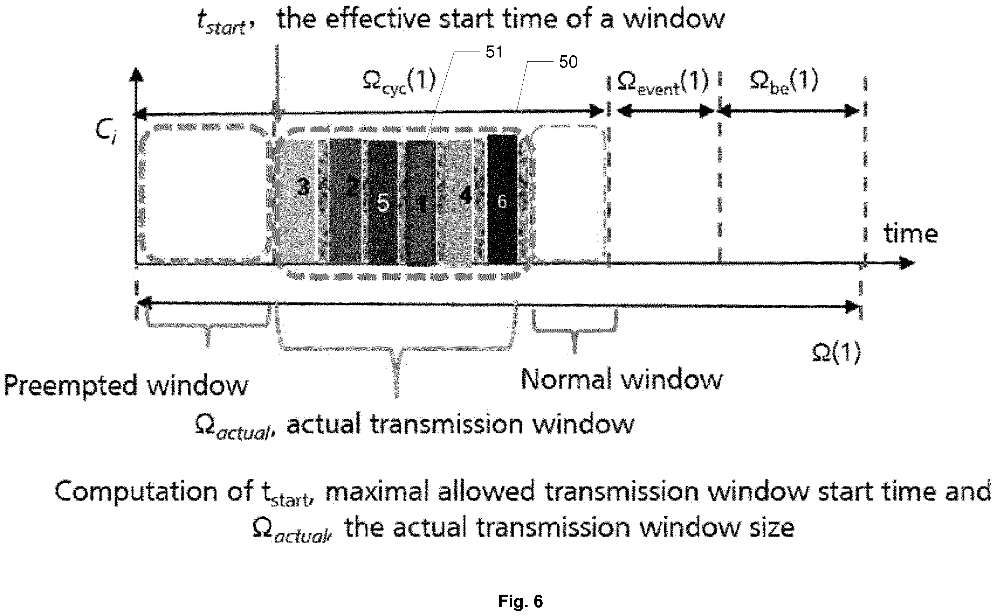

The core of the per-node scheduling methodology proposed in this disclosure (e.g., the AALP scheme) is to compute: 1) tₛₜₐᵣₜ, the effective transmission time in a window such that all packets are guaranteed to be transmitted before (or precisely at) their deadlines; and 2) Ω_{actual}, the effective transmission window size. As it is shown in Fig. 6, tₛₜₐᵣₜ and Ω_{actual} serve as the minimum and maximum latency a packet is going to experience on a link. The traffic types presented in the figure are illustrative. Here, Ω(k) refers to the network cycle.

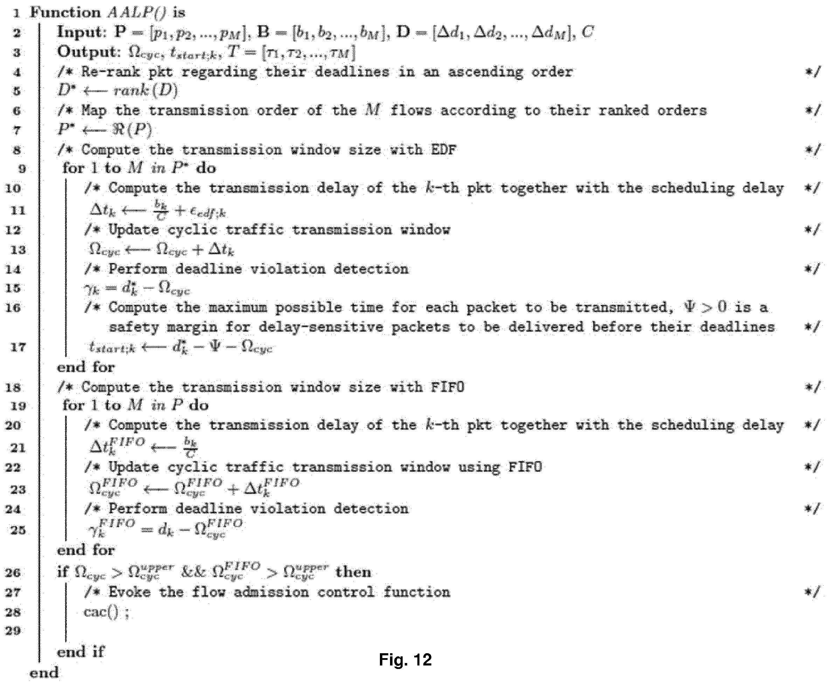

An example of AALP implementation in meta code is shown in Fig. 12.

In the following description reference is made again to Fig. 6.

Scheduling the time for transmission of the data packet from the intermediate node to the next node may comprise selecting a free period within the transmission time window 50 as a transmission period 51 for the data packet 1, wherein the free period is selected based on the latency budget. A free period is a period that has not been selected as a transmission period for any data packet.

According to the invention, selecting the free period as the transmission period 51 for the data packet 1 comprises the step of not selecting an earliest free period of the transmission time window 50 as the transmission period for the data packet. This allows to schedule one or more other data packets 3, 2, 5 to be transmitted earlier that the data packet 1, if required.

Selecting the free period as the transmission period 51 for the data packet 1 may comprise the step of selecting a latest suitable free period within the transmission window 50 based on the latency budget. The latest suitable period is the latest free period that complies with the latency budget of the data packet 1.

The method may comprise for each of one or more further data packets 2, 3, 4, 5, 6 to be transmitted via the intermediate node the step of selecting a free period within the transmission time window 50 as a transmission period for the further data packet.

This may further comprise the step of sending, by the intermediate node, the data packet and the one or more further data packets one after another in accordance with the chronological order of the transmission periods that are associated with the data packet and the one or more further data packets. In this embodiment, the intermediate node may send the data packet 1 and the one or more further data packets 2, 3, 4, 5, 6 immediately one after another (in the order 3, 2, 5, 1, 4, 6), irrespective of the presence or absence of any free periods in the transmission time window 50. In this or in another embodiment, the intermediate node may start said sending the data packet 1 and the one or more further data packets 2, 3, 4, 5, 6 at the beginning of the transmission time window 50, irrespective of the presence or absence of a free period at the beginning of the transmission time window 50.

The deadlines and data sizes of the M flows on a node are taken as the input parameters. The time values tₛₜₐᵣₜ, Ω_{actual} are generated as the outputs. A deadline violation check is perfomed, and the computation from the network-wide orchestration is validated.

It is distinguished between the "allocated transmission window" and the "effective (actual) transmission window". The deadline-aware AALP scheme offers higher flexibility (compared with the deadline-agnostic algorithms such CBS or CQF) in data transmission. In one option, the unused window within Ω_{cyc} can be preempted to transmit data from traffic classes with lower priority.

Deadline agnostic algorithms such CBS or CQF rely on complex worst latency analysis techniques to predict the per-hop latency of individual priority class. It is in essence an open-loop control function since the worst-case latency analysis does not have any impact on how CBS or CQF is configured. The concept of AALP developed in this disclosure is not only accurate and lightweight, the calculation of (tₛₜₐᵣₜ, Ω_{actual}) on each link is further used as a feedback information to the network-wide orchestration module (forming a closed feedback loop) to dynamically adjust the per-hop latency allocation.

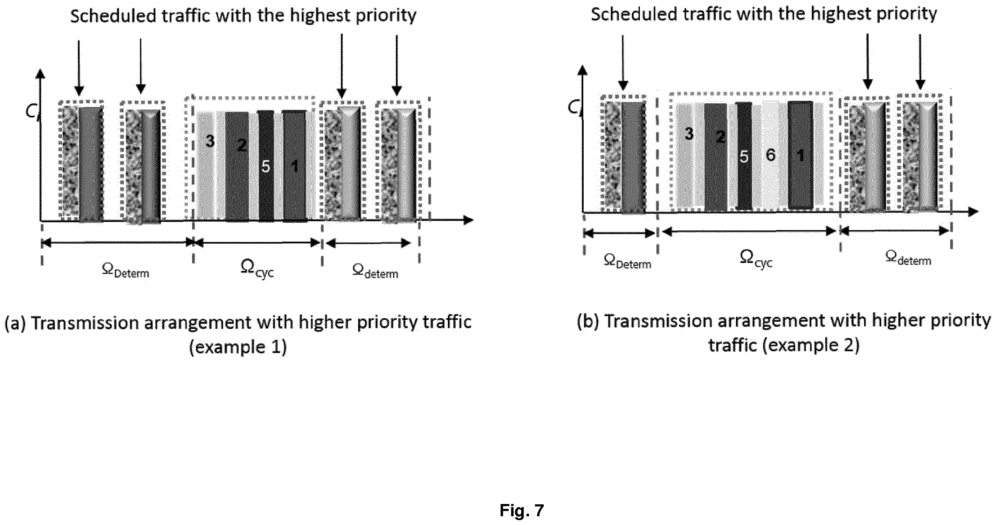

Another method may be considered, e.g., using the buffer size as the latency indicator. Such a scheme, however, is subject to errors when coexist with scheduled traffic with the highest priority. For instance, although the buffer size of the cyclic traffic in Fig. 7 (a) is smaller than that in Fig. 7 (b), the actual latency that a new flow is to experience in (a) is in fact higher than in (b) due to the existence of the scheduled traffic. This is to say, when coexisting with scheduled traffic, a gate opening time for queues with higher priority is served as an additional parameter to compute (tₛₜₐᵣₜ, Ω_{actual}).

### Network-Wide Latency Orchestration

Network-wide orchestration of per-hop latency for a number of flows is in essence a partitioning problem, i.e. partition a positive number Lᵢ (the E2E latency) to H parts (H hops along the path of delivery) such that the sum of the collection of positive integers [δᵢ₁, δᵢ₂,..., δ_{iH}] is equal to Lᵢ. Depending on the type of applications, the condition can be relaxed to Σδᵢⱼ ≤ Lᵢ, if an application only requires in-time delivery within the maximum latency. For other instances, such as jitter-constrained flow, Σδᵢⱼ = Lᵢ ± θᵢ needs to be guaranteed. An additional condition is to minimize the re-schedule events (i.e. number of existing flows to be rescheduled).

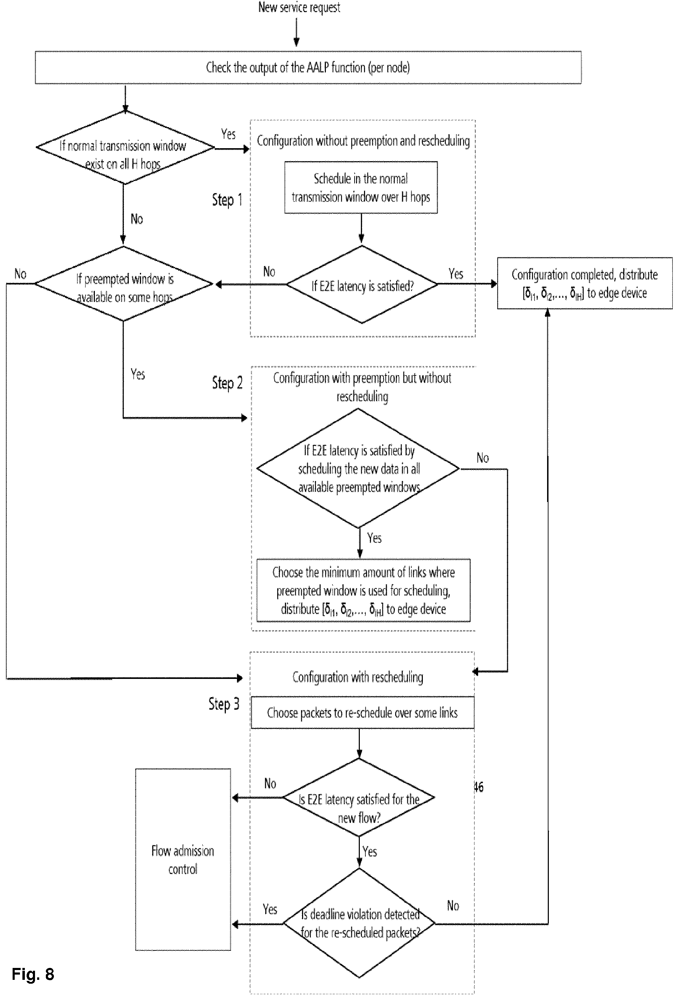

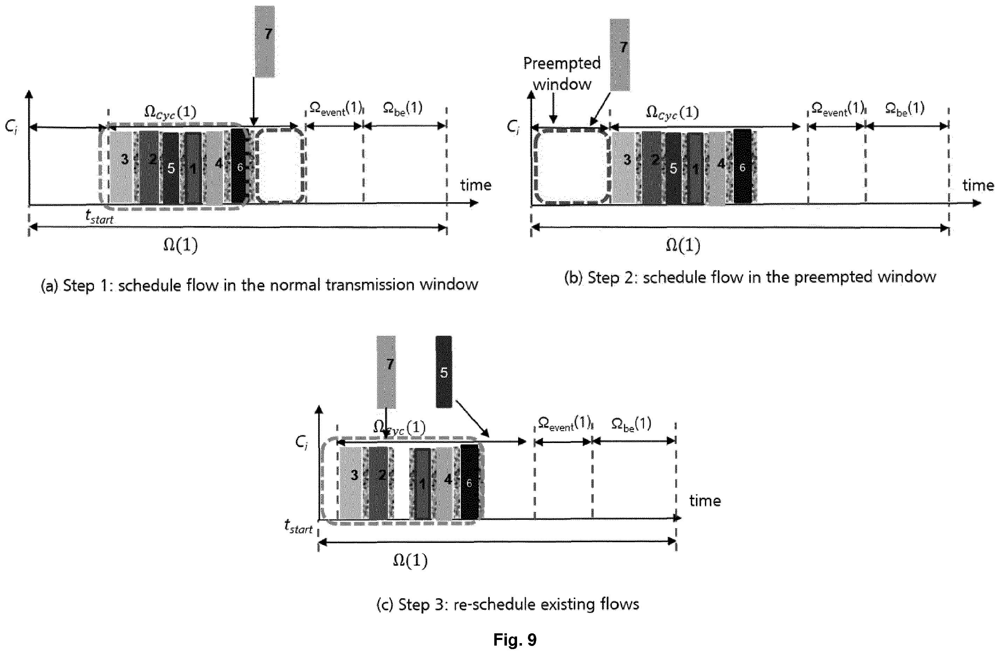

The flowchart in Fig. 8 provides a general guideline of the operations in the scheduler (network-wide latency orchestration module). In the first step, the orchestration module tries to schedule a new flow (e.g., packet 7 in Fig. 9 (a)) in the normal transmission window over all links along the path. If E2E latency, requested by the new flow, cannot be guaranteed, the orchestration module moves to step 2, where flow 7 is scheduled in the preempted window (see Fig. 9 (b)) over some flows. The computation engine may choose different rules to select the most appropriate links where packet 7 is preempted. In step 3, reschedule existing flows is issued over some links (see Fig. 9 (c), packet 5 is rescheduled) according to some rules if E2E latency cannot be satisfied by operations in the first two steps.

### Packet Forwarding in the Data Plane

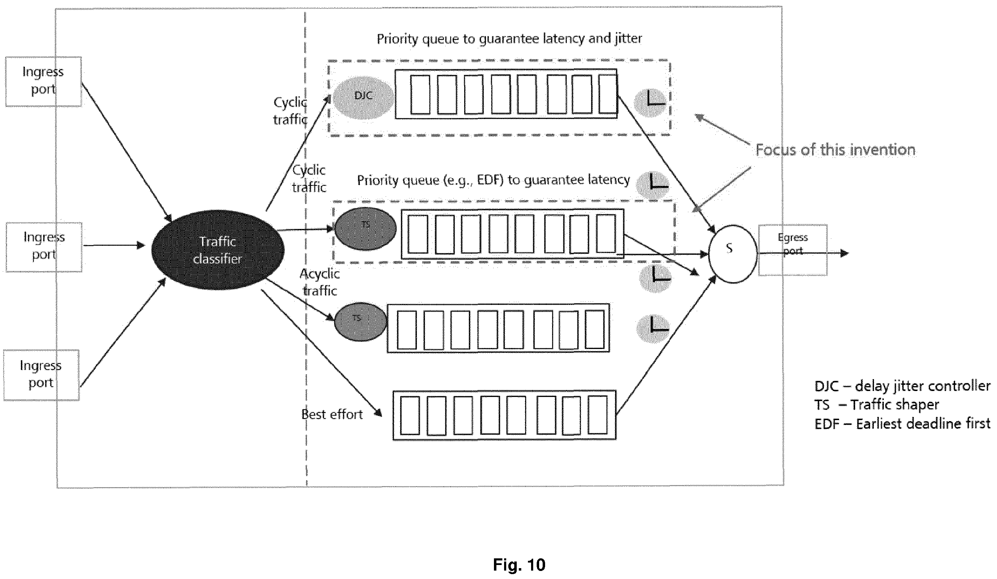

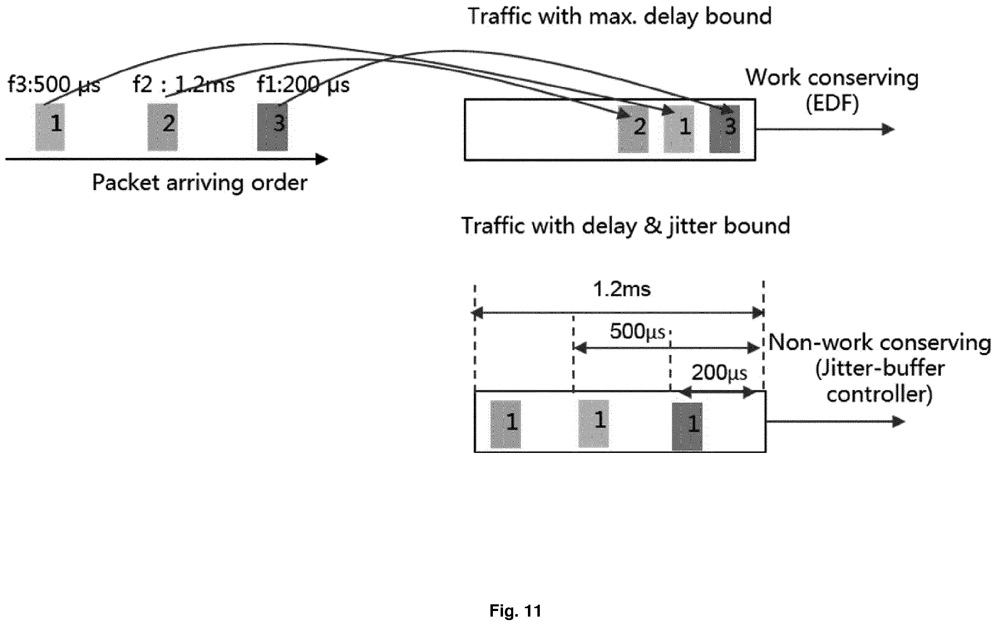

Data packets with maximum latency requirement are distinguished from packets with both latency and jitter requirements, and forwarded to different priority queues, see Fig. 10. The forwarding operations for the two types of priority queues are illustrated in Fig. 11, where the first type operates in a work-conserving mode, i.e. rank and forward packets as long as there is one in the queue, whereas the second type operates in a non-conserving mode, i.e. idle even there is a packet in the queue, only forward the packet precisely as the time-stamp indicates.

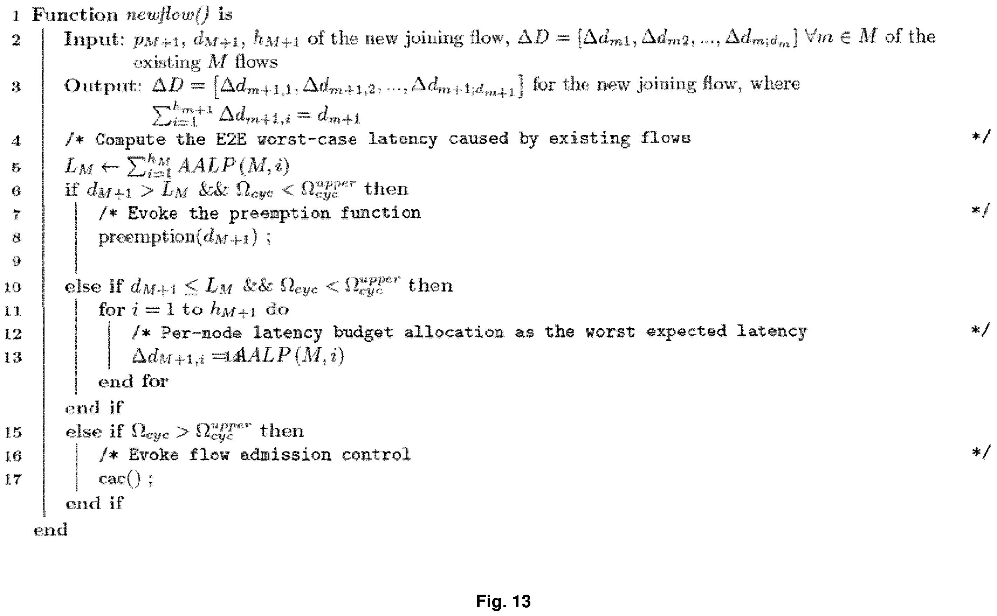

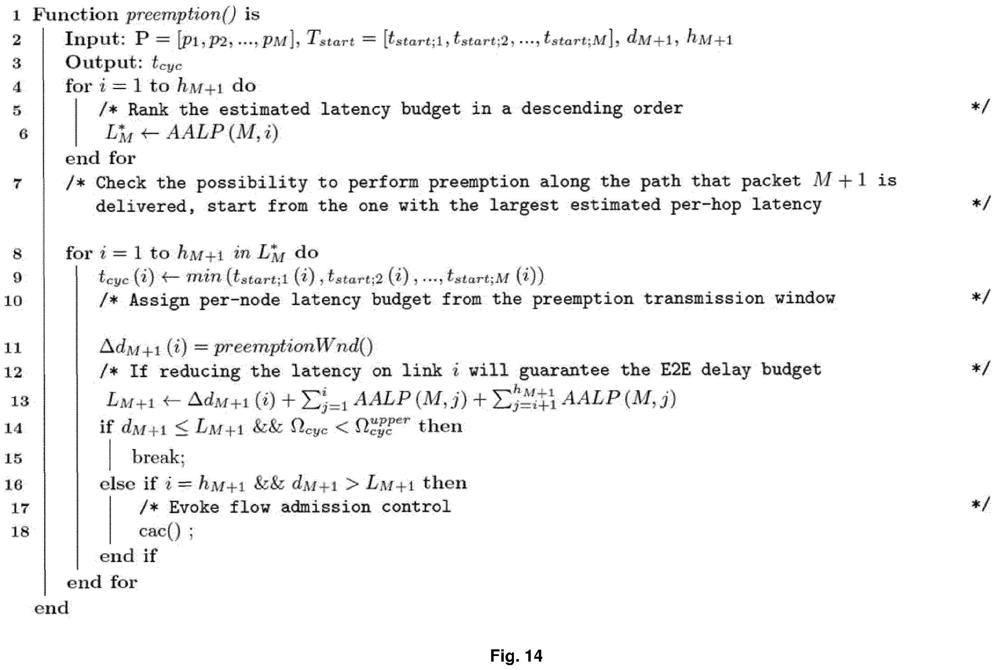

As an implementation of per-node scheduling, an example of meta code for implementing the AALP algorithm is illustrated in Fig. 12. An implementation of scheduling a new flow with preemption is provided with the meta code shown in Figs. 13 and 14, corresponding to a realization of Step 1 and 2 in the network-wide orchestration module.

In the context of IP networking, a stateless solution (i.e. without per flow management) is favored over the stateful ones (with per flow management) due to the scalability issue related with the latter approach. Such solution may comprise, for example, setting an end-to-end (E2E) delay bound by assigning a virtual time stamp to each packet k of flow i on a networking node j.

The present disclosure further provides a non-transitory computer-readable medium storing instructions that, when performed by a processor, cause the processor to perform a method according to any of the above-described embodiments.

The above described techniques allow scheduling a data packet in a way that a latency of the data packet will normally not exceed the maximum allowed E2E latency.

Instructions or software to control a processor to perform the methods as described above may be written as computer programs, code segments, instructions or any combination thereof, for individually or collectively instructing or configuring the processor to operate as a machine or special-purpose computer to perform the operations of the methods as described above. In one example, the instructions or software may include machine code that is directly executed by the processor, such as machine code produced by a compiler. In another example, the instructions or software may include higher level code that is executed by the processor using an interpreter. Programmers of ordinary skill in the art can readily write the instructions or software based on the description of the methods provided herein.

## Claims

1. A method for scheduling transmission of a data packet from a talker node (20) to a listener node (40) via one or more intermediate nodes (30, 31, 32) with a maximum allowed end-to-end, E2E, latency, wherein the method comprises for each of the one or more intermediate nodes (30, 31, 32):
determining, by a scheduler (10), a latency budget such that the sum of the latency budgets for all the one or more intermediate nodes (30, 31, 32) is less than or equal to the maximum allowed E2E latency communicating, by the scheduler, the determined latency budget to each of the one or more intermediate nodes (30, 31, 32); and
scheduling, by each of the one or more intermediate nodes (30, 31, 32), a time for transmission of the data packet from the intermediate node (30, 31, 32) to a next node based on the communicated latency budget, wherein the scheduling comprises selecting a free period within a transmission time window as a transmission period for the data packet, wherein the free period is selected based on the latency budget; the method being
**characterized in that**
selecting the free period as the transmission period for the data packet comprises: if the transmission time window comprises multiple free periods that each complies with the latency budget, not selecting
an earliest free period of the transmission time window as the transmission period for the data packet.

2. The method of claim 1, wherein said scheduling the time for transmission of the data packet from the intermediate node (30, 31, 32) to the next node comprises:
determining a waiting time budget which is shorter than the latency budget, and
scheduling the time for transmission based on the waiting time budget.

3. The method of claim 1 or 2, wherein the free period is selected as the transmission period such that a sum of a first delay and a second delay is less than or equal to the latency budget,
wherein the first delay is a time from arrival of the data packet at the intermediate node (30, 31, 32) to the beginning of the free period, and
the second delay is an estimate of a time from the beginning of the free period to arrival of the data packet at the next node.

4. The method of any one of claims 1 to 3, wherein selecting the free period as the transmission period for the data packet comprises:
selecting a latest suitable free period within the transmission window based on the latency budget.

5. The method of any one of claims 1 to 4, comprising for each of one or more further data packets to be transmitted via the intermediate node (30, 31, 32):
selecting a free period within the transmission time window as a transmission period for the further data packet.

6. The method of claim 5, further comprising: sending, by the intermediate node (30, 31, 32), the data packet and the one or more further data packets one after another in accordance with the chronological order of the transmission periods that are associated with the data packet and the one or more further data packets.

7. The method of any one of claims 1 to 6, wherein said scheduling the time for transmission of the data packet from the intermediate node (30, 31, 32) to the next node comprises for each of one or more further data packets to be transmitted by the intermediate node (30, 31, 32):
increasing a latency budget for the further data packet; and
scheduling a time for transmission of the further data packet from the intermediate node (30, 31, 32) based on the increased latency budget.

8. The method of claim 7, further comprising: decreasing a latency budget for the further data packet at another node.

9. A device for operating as an intermediate node (30, 31, 32) in a network, comprising processing circuitry configured to schedule a time for transmission of a data packet from the intermediate node (30, 31, 32) to a next node by:
selecting a free period within a transmission time window as a transmission period for the data packet, wherein the free period is selected based on a latency budget communicated by a scheduler (10); the device being
**characterized in that**
the processing circuitry is configured to:
if the transmission time window comprises multiple free periods that each complies with the latency
budget, select not the earliest of the multiple free periods as the transmission period for the data packet.

10. The device of claim 9, wherein the processing circuitry is configured to: if the transmission time window comprises multiple free periods that each complies with the latency budget, select the latest of the multiple free periods as the transmission period for the data packet.

11. A computer-readable medium storing instructions that when executed on a processor cause the processor to perform the method of any one of claims 1 to 8.

## Patentansprüche

1. Verfahren zum Planen der Übertragung eines Datenpakets aus einem Talker-Knoten (20) über einen oder mehrere Zwischenknoten (30, 31, 32) mit einer maximal zulässigen End-to-End-Latenz, E2E-Latenz, an einen Listener-Knoten (40), wobei das Verfahren für jeden des einen oder der mehreren Zwischenknoten (30, 31, 32) Folgendes umfasst:
Bestimmen eines Latenzbudgets durch einen Planer (10) derart, dass die Summe des Latenzbudgets für alle des einen oder der mehreren Zwischenknoten (30, 31, 32) kleiner oder gleich der maximal zulässigen E2E-Latenz ist;
Kommunizieren des bestimmten Latenzbudgets durch den Planer an jeden des einen oder der mehreren Zwischenknoten (30, 31, 32); und
Planen eines Zeitpunkts zur Übertragung des Datenpakets aus dem Zwischenknoten (30, 31, 32) durch jeden des einen oder der mehreren Zwischenknoten (30, 31, 32) an einen nächsten Knoten basierend auf dem kommunizierten Latenzbudget, wobei das Planen das Auswählen eines freien Zeitraums innerhalb eines Übertragungszeitfensters als ein Übertragungszeitraum für das Datenpaket umfasst, wobei der freie Zeitraum basierend auf dem Latenzbudget ausgewählt wird; wobei das Verfahren **dadurch gekennzeichnet ist, dass**
Auswählen des freien Zeitraums als der Übertragungszeitraum für das Datenpaket Folgendes umfasst: wenn das Übertragungszeitfenster mehrere freie Zeiträume umfasst, die jeweils mit dem Latenzbudget übereinstimmen, Nichtauswählen eines frühesten freien Zeitraums des Übertragungszeitfensters als der Übertragungszeitraum für das Datenpaket.

2. Verfahren nach Anspruch 1, wobei das Planen des Zeitpunkts zur Übertragung des Datenpakets aus dem Zwischenknoten (30, 31, 32) an den nächsten Knoten Folgendes umfasst:
Bestimmen eines Wartezeitbudgets, welches kürzer als das Latenzbudget ist, und
Planen des Zeitpunkts zur Übertragung basierend auf dem Wartezeitbudget.

3. Verfahren nach Anspruch 1 oder 2, wobei der freie Zeitraum als der Übertragungszeitraum derart gewählt wird, dass eine Summe aus einer ersten Verzögerung und einer zweiten Verzögerung kleiner oder gleich dem Latenzbudget ist,
wobei die erste Verzögerung ein Zeitpunkt von dem Eintreffen des Datenpakets an dem Zwischenknoten (30, 31, 32) bis zu dem Beginn des freien Zeitraums ist, und
die zweite Verzögerung eine Schätzung eines Zeitpunkts ab dem Beginn des freien Zeitraums bis zum Eintreffen des Datenpakets an dem nächsten Knoten ist.

4. Verfahren nach einem der Ansprüche 1 bis 3, wobei das Auswählen des freien Zeitraums als der Übertragungszeitraum für das Datenpaket Folgendes umfasst:
Auswählen eines spätesten geeigneten freien Zeitraums innerhalb des Übertragungsfensters basierend auf dem Latenzbudget.

5. Verfahren nach einem der Ansprüche 1 bis 4, umfassend für jedes von einem oder mehreren weiteren Datenpaketen, die über den Zwischenknoten (30, 31, 32) zu übertragen sind:
Auswählen eines freien Zeitraums innerhalb des Übertragungszeitfensters als ein Übertragungszeitraum für das weitere Datenpaket.

6. Verfahren nach Anspruch 5, ferner umfassend: Senden, durch den Zwischenknoten (30, 31, 32), des Datenpakets und des einen oder der mehreren weiteren Datenpakete nacheinander gemäß der chronologischen Reihenfolge der Übertragungszeiträume, die dem Datenpaket und dem einen oder den mehreren weiteren Datenpaketen zugeordnet sind.

7. Verfahren nach einem der Ansprüche 1 bis 6, wobei das Planen des Zeitpunkts zur Übertragung des Datenpakets aus dem Zwischenknoten (30, 31, 32) an den nächsten Knoten für jedes von einem oder mehreren weiteren Datenpaketen, die durch den Zwischenknoten (30, 31, 32) zu übertragen sind, Folgendes umfasst:
Erhöhen eines Latenzbudgets für das weitere Datenpaket; und
Planen eines Zeitpunkts zur Übertragung des weiteren Datenpakets aus dem Zwischenknoten (30, 31, 32) basierend auf dem erhöhten Latenzbudget.

8. Verfahren nach Anspruch 7, ferner umfassend: Verringern eines Latenzbudgets für das weitere Datenpaket an einem anderen Knoten.

9. Vorrichtung zum Betreiben als ein Zwischenknoten (30, 31, 32) in einem Netzwerk, umfassend eine Verarbeitungsschaltung, die dazu konfiguriert ist, einen Zeitpunkt zur Übertragung eines Datenpakets aus dem Zwischenknoten (30, 31, 32) an einen nächsten Knoten zu planen, durch:
Auswählen eines freien Zeitraums innerhalb eines Übertragungszeitfensters als ein Übertragungszeitraum für das Datenpaket, wobei der freie Zeitraum basierend auf einem Latenzbudget, das durch einen Planer (10) kommuniziert wird, ausgewählt wird;
wobei die Vorrichtung **dadurch gekennzeichnet ist, dass** die Verarbeitungsschaltung dazu konfiguriert ist:
wenn das Übertragungszeitfenster mehrere freie Zeiträume umfasst, dass jeder mit dem Latenzbudget übereinstimmt, nicht den frühesten der mehreren freien Zeiträume als den Übertragungszeitraum für das Datenpaket auszuwählen.

10. Vorrichtung nach Anspruch 9, wobei die Verarbeitungsschaltung dazu konfiguriert ist:
wenn das Übertragungszeitfenster mehrere freie Zeiträume umfasst, dass jeder mit dem Latenzbudget übereinstimmt, den spätesten der mehreren freien Zeiträume als den Übertragungszeitraum für das Datenpaket auszuwählen.

11. Computerlesbares Medium, das Anweisungen speichert, die bei Ausführung auf einem Prozessor bewirken, dass der Prozessor das Verfahren nach einem der Ansprüche 1 bis 8 durchführt.

## Revendications

1. Procédé de planification de la transmission d'un paquet de données d'un nœud émetteur (20) à un nœud auditeur (40) par le biais d'un ou plusieurs nœuds intermédiaires (30, 31, 32) avec une latence de bout en bout, E2E, maximale autorisée, dans lequel le procédé comprend, pour chacun des un ou plusieurs nœuds intermédiaires (30, 31, 32) :
la détermination, par un planificateur (10), d'un budget de latence de telle sorte que la somme des budgets de latence pour tous les un ou plusieurs nœuds intermédiaires (30, 31, 32) est inférieure ou égale à la latence E2E maximale autorisée ;
la communication, par le planificateur, du budget de latence déterminé à chacun des un ou plusieurs nœuds intermédiaires (30, 31, 32) ; et
la planification, par chacun des un ou plusieurs nœuds intermédiaires (30, 31, 32), d'un temps de transmission du paquet de données du nœud intermédiaire (30, 31, 32) à un nœud suivant sur la base du budget de latence communiqué, dans lequel la planification comprend la sélection d'une période libre dans une fenêtre de temps de transmission
comme période de transmission pour le paquet de données, dans lequel la période libre est sélectionnée sur la base du budget de latence ; le procédé étant
**caractérisé en ce que**
la sélection de la période libre comme période de transmission du paquet de données comprend : si la fenêtre de temps de transmission comprend plusieurs périodes libres qui respectent chacune le budget de latence, la non sélection
d'une première période libre de la fenêtre de temps de transmission comme période de transmission du paquet de données.

2. Procédé selon la revendication 1, dans lequel la planification du temps de transmission du paquet de données du nœud intermédiaire (30, 31, 32) au nœud suivant comprend :
la détermination d'un budget de temps d'attente plus court que le budget de latence, et
la planification du temps de transmission sur la base du budget de temps d'attente.

3. Procédé selon la revendication 1 ou 2, dans lequel la période libre est sélectionnée comme période de transmission de telle sorte qu'une somme d'un premier retard et d'un second retard est inférieure ou égale au budget de latence,
dans lequel le premier retard est un temps écoulé entre l'arrivée du paquet de données au nœud intermédiaire (30, 31, 32) et le début de la période libre, et
le second retard est une estimation du temps écoulé entre le début de la période libre et l'arrivée du paquet de données au nœud suivant.

4. Procédé selon l'une quelconque des revendications 1 à 3, dans lequel la sélection de la période libre comme période de transmission du paquet de données comprend :
la sélection d'une dernière période libre appropriée dans la fenêtre de transmission sur la base du budget de latence.

5. Procédé selon l'une quelconque des revendications 1 à 4, comprenant, pour chacun d'un ou de plusieurs paquets de données supplémentaires à transmettre par le biais du nœud intermédiaire (30, 31, 32) :
la sélection d'une période libre dans la fenêtre de temps de transmission comme période de transmission pour le paquet de données supplémentaire.

6. Procédé selon la revendication 5, comprenant également :
l'envoi, par le nœud intermédiaire (30, 31, 32), du paquet de données et des un ou plusieurs paquets de données supplémentaires l'un après l'autre selon l'ordre chronologique des périodes de transmission qui sont associées au paquet de données et aux un ou plusieurs paquets de données supplémentaires.

7. Procédé selon l'une quelconque des revendications 1 à 6, dans lequel ladite planification du temps de transmission du paquet de données du nœud intermédiaire (30, 31, 32) au nœud suivant comprend, pour chacun des un ou plusieurs paquets de données supplémentaires à transmettre par le nœud intermédiaire (30, 31, 32) :
l'augmentation du budget de latence pour le paquet de données supplémentaire ; et
la planification d'un temps de transmission du paquet de données supplémentaire à partir du nœud intermédiaire (30, 31, 32) sur la base du budget de latence augmenté.

8. Procédé selon la revendication 7, comprenant également : la diminution d'un budget de latence pour le paquet de données supplémentaire au niveau d'un autre nœud.

9. Dispositif fonctionnant comme nœud intermédiaire (30, 31, 32) dans un réseau, comprenant un circuit de traitement configuré pour planifier le temps de transmission d'un paquet de données du nœud intermédiaire (30, 31, 32) à un nœud suivant par :
la sélection d'une période libre dans une fenêtre de temps de transmission comme période de transmission pour le paquet de données, dans lequel la période libre est sélectionnée sur la base d'un budget de latence communiqué par un planificateur (10) ; le dispositif étant
**caractérisé en ce que**
le circuit de traitement est configuré pour :
si la fenêtre de temps de transmission comprend plusieurs périodes libres qui respectent chacune le budget de latence, ne pas sélectionner la première des plusieurs périodes libres comme période de transmission du paquet de données.

10. Dispositif selon la revendication 9, dans lequel le circuit de traitement est configuré pour :
si la fenêtre de temps de transmission comprend plusieurs périodes libres qui respectent chacune le budget de latence, sélectionner la première des plusieurs périodes libres comme période de transmission du paquet de données.

11. Support lisible par ordinateur stockant des instructions qui, lorsqu'elles sont exécutées sur un processeur, amènent le processeur à réaliser le procédé selon l'une quelconque des revendications 1 à 8.
